# EUROPEAN PATENT APPLICATION

(11) **EP 4 563 382 A1**
(43) Date of publication of application: **04.06.2025**
(21) Application number: 23845536.4
(22) Date of filing: 25.07.2023
(51) Int. Cl.: B60K 6/40, H02K 5/04, F02M 35/104

(54) **DRIVING ASSEMBLY AND VEHICLE HAVING SAME**

(30) Priority: 29.07.2022 CN 202210906128
(71) Applicant: BYD Company Limited, Shenzhen, Guangdong 518118 (CN)
(72) Inventor: LUO, Hongbin, Shenzhen, Guangdong 518118 (CN); CHU, Zhaowei, Shenzhen, Guangdong 518118 (CN); HUA, Yu, Shenzhen, Guangdong 518118 (CN); ZHANG, Yujia, Shenzhen, Guangdong 518118 (CN); ZHUANG, Yanyu, Shenzhen, Guangdong 518118 (CN)
(74) Representative: Mathys & Squire
(86) International application number: PCT/CN2023/109088
(87) International publication number: WO 2024/022326

(57) **Abstract**

A vehicle, having a driving assembly (1). The driving assembly (1) comprises an engine (100), a speed increaser (910), an energy storage device (920), a generator (300), a driving electric motor (900), and an integrated electric-motor controller (500). An input end of the speed increaser (910) is connected to the engine (100). The generator (300) is connected to an output end of the speed increaser (910). The integrated electric-motor controller (500) is mounted on the generator (300), and the integrated electric-motor controller (500) is connected to each of the generator (300), the driving electric motor (900), and the energy storage device (920).

## Description

### CROSS-REFERENCE TO RELATED APPLICATIONS

The present disclosure claims priority to Chinese Patent Application No. 202210906128.9, filed on July 29, 2022 and entitled "DRIVING ASSEMBLY AND VEHICLE HAVING SAME". The entire content of the above-referenced application is incorporated herein by reference.

### FIELD

The present disclosure relates to the field of vehicle technologies, and specifically, to a driving assembly and a vehicle having same.

### BACKGROUND

In the related art, a driving assembly usually includes an integrated electric-motor controller, a speed increaser, and a generator. With such an arrangement, the integrated electric-motor controller, for example, a driving integrated electric-motor controller, occupies a large space, resulting in low space utilization, also affects energy conversion efficiency throughout a power generation and driving process, and leads to poor collaborative operating efficiency of an engine and a driving electric motor.

### SUMMARY

The present disclosure is intended to resolve at least one of technical problems existing in the related art. In view of this, an objective of the present disclosure is to provide a driving assembly. The driving assembly has advantages such as a light weight, a compact structure, high space utilization, and low energy consumption.

To achieve the foregoing objective, according to an embodiment of a first aspect of the present disclosure, a driving assembly is provided, including: an engine; a speed increaser, where an input end of the speed increaser is connected to the engine; a generator, a driving electric motor, and an energy storage device, where the generator is connected to an output end of the speed increaser; and an integrated electric-motor controller, where the integrated electric-motor controller is mounted on the generator, and the integrated electric-motor controller is respectively connected to the generator, the driving electric motor, and the energy storage device.

The driving assembly according to the embodiments of the present disclosure has advantages such as a light weight, a compact structure, high space utilization, and low energy consumption.

According to some embodiments of the present disclosure, the generator includes: a housing; a first end cap, where the first end cap is mounted at one end of the housing to seal and cover the one end of the housing, and the first end cap is provided with a rotor bearing chamber; a second end cap, where the second end cap is mounted at the other end of the housing to seal and cover the other end of the housing; a stator and a rotor, where the stator and the rotor are mounted in the housing, and the rotor is rotatable with respect to the stator; and a rotor bearing, where the rotor bearing is arranged at the rotor and arranged in the rotor bearing chamber. The integrated electric-motor controller is mounted at the first end cap and the second end cap.

According to some embodiments of the present disclosure, the second end cap is configured with a controller interface, and the controller interface is configured to connect the integrated electric-motor controller and the generator and connect the integrated electric-motor controller and the driving electric motor.

According to some embodiments of the present disclosure, the second end cap is configured with a sealing groove arranged around the controller interface, a sealing ring is mounted in the sealing groove, and the sealing ring seals a gap between the integrated electric-motor controller and the second end cap.

According to some embodiments of the present disclosure, a bearing bush is mounted in the rotor bearing chamber, the bearing bush is sleeved over the rotor bearing, and a thermal expansion coefficient of the bearing bush is closer to a thermal expansion coefficient of the rotor bearing of the generator than a thermal expansion coefficient of the first end cap.

According to some embodiments of the present disclosure, the first end cap is configured with an annular generator mounting platform and multiple reinforcing ribs, the annular generator mounting platform surrounds the rotor bearing chamber, the annular generator mounting platform is configured with a generator casing mounting structure, and the multiple reinforcing ribs are respectively connected to the annular generator mounting platform and are arranged at intervals along a circumferential direction of the rotor bearing chamber.

According to some embodiments of the present disclosure, the engine includes: an air intake manifold; an intercooler, where the intercooler is provided with a first air inlet and an air outlet, and the air outlet is in communication with the air intake manifold; and a throttle, where the throttle is arranged at the first air inlet.

According to some embodiments of the present disclosure, the engine further includes: an engine cylinder block, where the air intake manifold is in communication with the engine cylinder block; and a cylinder head, where the cylinder head covers above the engine cylinder block, and a mounting bracket is arranged on the cylinder head. In an up-down direction, the intercooler is located above the air intake manifold, and the mounting bracket is fixedly connected to at least one of the intercooler and the throttle.

According to some embodiments of the present disclosure, the intercooler includes: an intercooler body; and an air inlet cavity and an air outlet cavity, where the intercooler body is arranged between the air inlet cavity and the air outlet cavity and respectively in communication with the air inlet cavity and the air outlet cavity, the first air inlet is opened in the air inlet cavity, and the air outlet is opened in the air outlet cavity.

According to some embodiments of the present disclosure, a gas storage capacity of the intercooler body is V1, and V1 satisfies a relation formula: 1200 ml ≤ V1 ≤ 1300 ml.

According to some embodiments of the present disclosure, the air inlet cavity is provided with a first air inlet section, a second air inlet section, and a third air inlet section sequentially in communication, the first air inlet section is in communication with the first air inlet, the third air inlet section is in communication with the intercooler body to uniformly guide gas into the intercooler body, a cross-sectional area of the third air inlet section is greater than a cross-sectional area of the first air inlet section, and a cross-sectional area of the second air inlet section gradually increases from the first air inlet section to the third air inlet section.

According to some embodiments of the present disclosure, a spacing between a front side wall and a rear side wall of the second air inlet section gradually increases from right to left, an angle between the front side wall and the rear side wall of the second air inlet section is α, and α satisfies a relation formula: 50° ≤ α ≤ 70°.

According to some embodiments of the present disclosure, the air outlet cavity is provided with a first air outlet section, a second air outlet section, and a third air outlet section sequentially in communication, the first air outlet section is in communication with the air outlet, the third air outlet section is in communication with the intercooler body to uniformly guide gas into the air intake manifold, a cross-sectional area of the third air outlet section is less than a cross-sectional area of the first air outlet section, and a cross-sectional area of the second air outlet section gradually decreases from an end close to the first air outlet section to an end close to the third air outlet section.

According to some embodiments of the present disclosure, a spacing between a front side wall and a rear side wall of the second air outlet section gradually decreases from right to left, an angle between the rear side wall of the second air outlet section and a cross-section of the air outlet cavity is β, and β satisfies a relation formula: 20° ≤ β ≤ 40°.

According to some embodiments of the present disclosure, a spacing between an upper side wall and a lower side wall of the second air outlet section gradually decreases from right to left, an angle between the upper side wall and the lower side wall of the second air outlet section is γ, and γ satisfies a relation formula: 25° ≤ γ ≤ 35°.

According to some embodiments of the present disclosure, the driving assembly further includes: an elastic support member, where the air intake manifold includes an upper manifold piece and a lower manifold piece, where the upper manifold piece is arranged above the lower manifold piece, a first mounting piece is arranged on the upper manifold piece, a second mounting piece is arranged on the lower manifold piece, the first mounting piece is higher than the second mounting piece, the intercooler is arranged above the upper manifold piece and respectively fixedly connected to the first mounting piece and the second mounting piece, and the elastic support member is arranged on the upper manifold piece and elastically abuts against and matching the intercooler.

According to some embodiments of the present disclosure, the air intake manifold is provided with a pressure stabilizing cavity and an air inlet passage, one end of the air inlet passage is in communication with the pressure stabilizing cavity, the other end of the air inlet passage is in communication with the engine, a bottom wall of the air inlet passage includes a first wall section, the first wall section is connected to a bottom wall of the pressure stabilizing cavity and is arranged obliquely downward with respect to the bottom wall of the pressure stabilizing cavity, an angle δ is formed between the first wall section and the bottom wall of the pressure stabilizing cavity, and 2° ≤ δ ≤ 5°.

According to some embodiments of the present disclosure, the bottom wall of the air inlet passage further includes a second wall section, where the second wall section is connected to a side of the first wall section away from the pressure stabilizing cavity, the second wall section is arranged obliquely downward with respect to the first wall section, an angle ε is formed between the second wall section and the first wall section, and 24° ≤ ε ≤ 26.

According to some embodiments of the present disclosure, a volume of the pressure stabilizing cavity is V2, and V2 satisfies a relation formula: 1 L < V2 < 1.2 L.

According to some embodiments of the present disclosure, a length of the air inlet passage is L, and L satisfies a relation formula: 70 mm < L < 80 mm.

According to some embodiments of the present disclosure, the pressure stabilizing cavity is provided with: an impact separation piece, where the impact separation piece is located in the pressure stabilizing cavity, to impact entering gas to reduce generation of condensed water; and
a flow guiding piece, where the flow guiding piece is arranged in the pressure stabilizing cavity, to guide condensed water in the pressure stabilizing cavity to the air inlet passage.

According to some embodiments of the present disclosure, the impact separation piece is an impact grid, the pressure stabilizing cavity is provided with a second air inlet, and the impact grid corresponds to the second air inlet, to impact entering gas to reduce generation of condensed water; and the flow guiding piece includes multiple flow guiding baffles, multiple air inlet passages are provided, each flow guiding baffle is arranged extending toward the air inlet passage, and the multiple flow guiding baffles guide condensed water in the pressure stabilizing cavity to the multiple air inlet passages.

According to some embodiments of the present disclosure, the driving assembly further includes: an air filter, where the air filter is connected to an air inlet pipe; a mixing valve, where an air inlet end of the mixing valve is in communication with the air inlet pipe, an air outlet end of the mixing valve is in communication with the throttle, and a negative pressure at the air outlet end of the mixing valve is greater than a negative pressure at the air inlet end of the mixing valve; and a first vent tube, where one end of the first vent tube is connected to a crankcase of the engine, and the other end of the first vent tube is connected to the air inlet pipe.

According to some embodiments of the present disclosure, the driving assembly further includes: a vent valve, where the one end of the first vent tube is connected to the crankcase by the vent valve; and a second vent tube, where one end of the second vent tube is connected to the vent valve, the other end of the second vent tube is connected to the intercooler, and a vent load of the second vent tube is less than a vent load of the first vent tube.

According to some embodiments of the present disclosure, a height of the first vent tube gradually decreases from the one end to the other end of the first vent tube; and/or a height of the second vent tube gradually decreases from the one end to the other end of the second vent tube.

According to some embodiments of the present disclosure, the driving assembly further includes: a thermal insulation jacket, where the thermal insulation jacket is sleeved over the first vent tube, and a wall thickness of the thermal insulation jacket ranges from 3 mm to 5 mm.

According to some embodiments of the present disclosure, the engine includes: a cylinder head cover, where the cylinder head cover is in communication with the crankcase; and an air supplementing one-way valve, where the air supplementing one-way valve is arranged at the cylinder head cover and respectively in communication with the air filter and the cylinder head cover.

According to some embodiments of the present disclosure, the driving assembly further includes: a supercharger, where the mixing valve is in communication with the throttle through the supercharger; and an exhaust circulation valve, where the exhaust circulation valve is in communication with the throttle through the supercharger, and the exhaust circulation valve is in communication with an exhaust manifold of the engine.

According to an embodiment of a second aspect of the present disclosure, a vehicle is provided, including the driving assembly according to the embodiment of the first aspect of the present disclosure.

Through the use of the driving assembly according to the embodiment of the first aspect of the present disclosure, the vehicle according to the embodiment of the second aspect of the present disclosure has advantages such as a light weight, a compact structure, high space utilization, and low energy consumption.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description made with reference to the following accompanying drawings, where:
FIG. 1 is a schematic structural diagram of an engine of a driving assembly according to an embodiment of the present disclosure;
FIG. 2 is a schematic structural diagram of an air intake manifold of an engine according to an embodiment of the present disclosure;
FIG. 3 is a schematic structural diagram of an air inlet cavity of an intercooler according to an embodiment of the present disclosure;
FIG. 4 is a schematic structural diagram of an air outlet cavity of an intercooler according to an embodiment of the present disclosure;
FIG. 5 is another schematic structural diagram of an air inlet cavity of an intercooler according to an embodiment of the present disclosure;
FIG. 6 is a schematic structural diagram of an air intake manifold according to an embodiment of the present disclosure;
FIG. 7 is a schematic structural diagram of an air intake manifold from another viewing angle according to an embodiment of the present disclosure;
FIG. 8 is a cross-sectional view of an air intake manifold according to an embodiment of the present disclosure;
FIG. 9 is a schematic structural diagram of an impact grid and a flow guiding baffle of an intercooler according to an embodiment of the present disclosure;
FIG. 10 is a schematic structural diagram of an air intake manifold from still another viewing angle according to an embodiment of the present disclosure;
FIG. 11 is an exploded view of a generator according to an embodiment of the present disclosure;
FIG. 12 is a schematic structural diagram of a generator according to an embodiment of the present disclosure;
FIG. 13 is a schematic structural diagram of a second end cap according to an embodiment of the present disclosure;
FIG. 14 is a schematic structural diagram of a first end cap according to an embodiment of the present disclosure;
FIG. 15 is a schematic connection diagram of a driving assembly according to an embodiment of the present disclosure;
FIG. 16 is a schematic diagram of a driving assembly according to an embodiment of the present disclosure; and
FIG. 17 is a schematic block diagram of a vehicle according to an embodiment of the present disclosure.

In the drawings:
1. driving assembly; 100. engine; 110. air intake manifold; 111. upper manifold piece; 112. first mounting piece; 113. lower manifold piece; 114. second mounting piece; 115. pressure stabilizing cavity; 116. impact grid; 117. flow guiding baffle; 118. second air inlet; 119. air inlet passage; 119a. first wall section; 119b. second wall section; 120. intercooler; 121. first air inlet; 122. air outlet; 123. intercooler body; 124. air inlet cavity; 125. first air inlet section; 126. second air inlet section; 1261. front side wall; 1262. rear side wall; 127. third air inlet section; 128. air outlet cavity; 128a. first air outlet section; 128b. second air outlet section; 128b1. front side wall; 128b2. rear side wall; 128b3. upper side wall; 128b4. lower side wall; 128c. third air outlet section; 130. throttle; 140. engine cylinder block; 150. cylinder head; 151. mounting bracket; 160. cylinder head cover; 170. air supplementing one-way valve; 180. crankcase; 300. generator; 310. housing; 320. first end cap; 321. rotor bearing chamber; 322. bearing bush; 323. annular generator mounting platform; 324. reinforcing rib; 330. second end cap; 331. controller mounting position; 332. controller interface; 333. first wire holder; 334. second wire holder; 335. sealing groove; 340. stator; 350. rotor; 500. integrated electric-motor controller; 600. elastic support member; 610. air filter; 611. air inlet pipe; 700. mixing valve; 710. air outlet end; 720. air inlet end; 800. first vent tube; 810. vent valve; 820. second vent tube; 830. thermal insulation jacket; 840. supercharger; 850. exhaust circulation valve; 900. driving electric motor; 910. speed increaser; 911. input end; 912. output end; 913. first gear; 914. second gear; 920. energy storage device; 3231. generator casing mounting structure; 351. rotor bearing; and vehicle 1000.

### DETAILED DESCRIPTION

The embodiments described with reference to the accompanying drawings are exemplary, and the following describes the embodiments of the present disclosure in detail.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In the description of the present disclosure, a "first feature" and a "second feature" may include one or more such features.

In the description of the present disclosure, the meaning of "multiple" is two or more than two.

A driving assembly 1 according to an embodiment of the present disclosure is described below with reference to the accompanying drawings.

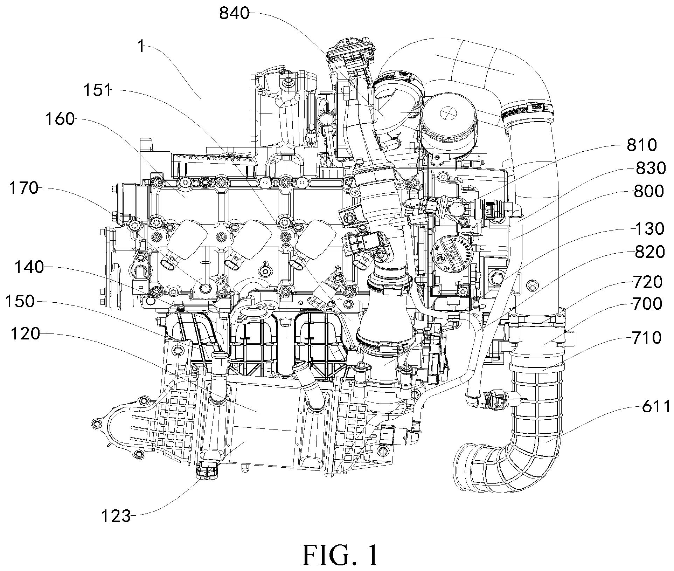

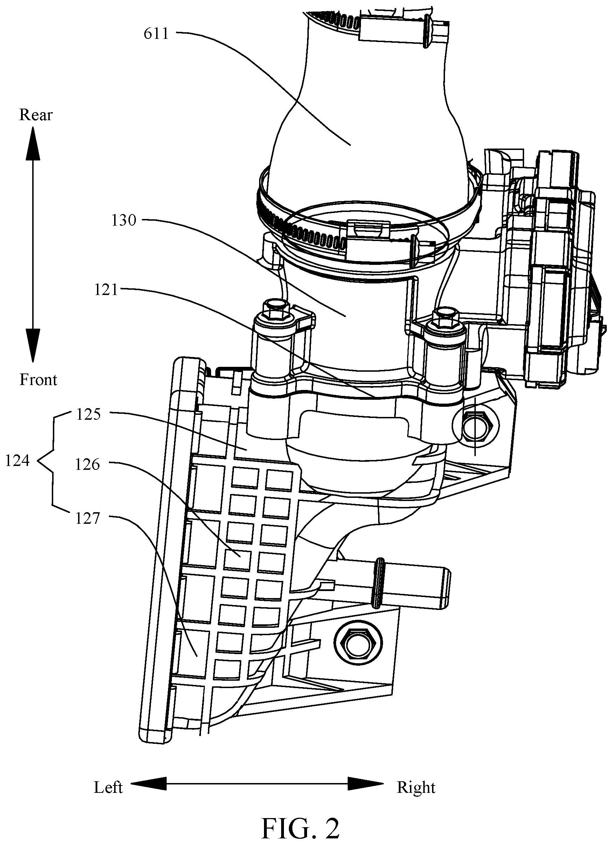

As shown in FIG. 1 to FIG. 16, the driving assembly 1 according to an embodiment of the present disclosure includes an engine 100, a speed increaser 910, a generator 300, a driving electric motor 900, an energy storage device 920, and an integrated electric-motor controller 500. The energy storage device 920 may be a battery pack.

An input end 911 of the speed increaser 910 is connected to the engine 100. The generator 300 is connected to an output end 912 of the speed increaser 910. The integrated electric-motor controller 500 is mounted on the generator 300. The integrated electric-motor controller 500 is respectively connected to the generator 300, the driving electric motor 900, and the energy storage device 920.

In other words, the generator 300 may be in transmission connection with the engine 100 by the speed increaser 910. When an output rotational speed of the engine 100 is low, power outputted by the engine 100 first passes through the speed increaser 910, undergoes speed increasing by the speed increaser 910, and is then transferred to the generator 300. An output rotational speed of the speed increaser 910 is greater than the output rotational speed of the engine 100, and at the same time an output torque of the speed increaser 910 is less than an output torque of the engine 100. In other words, the speed increaser 910 has the functions of increasing a speed and reducing a torque, so that an input rotational speed of the generator 300 can be in a high-efficiency operating range of the generator 300, to avoid a mismatch between the output rotational speed of the engine 100 and the high-efficiency range of the generator 300, thereby improving system efficiency, and helping to reduce fuel consumption.

For example, the input end 911 of the speed increaser 910 is connected to a first gear 913. The output end 912 of the speed increaser 910 is connected to a second gear 914. The first gear 913 is engaged with the second gear 914. A diameter of the first gear 913 is greater than a diameter of the second gear 914.

In addition, the integrated electric-motor controller 500 is mounted on the generator 300. The integrated electric-motor controller 500 is respectively connected to the generator 300, the driving electric motor 900, and the energy storage device 920. In other words, the same integrated electric-motor controller 500 controls the generator 300 and the driving electric motor 900 at the same time. The generator 300 and the driving electric motor 900 may be two separately arranged electric motors. One integrated electric-motor controller 500 controls the generator 300 and the driving electric motor 900, so that a quantity of parts of the driving assembly 1 can be reduced, and a weight of the driving assembly 1 can be lighter.

In addition, the integrated electric-motor controller 500 is integrated onto the generator 300, so that the generator 300 and the integrated electric-motor controller 500 have a more compact structure and higher reliability, and the generator 300, the driving electric motor 900, and the integrated electric-motor controller 500 have a smaller volume. In other words, the structure of the driving assembly 1 can be more compact, to further reduce an occupied space of the driving assembly 1, making it convenient to mount the driving assembly 1. In addition, the integrated electric-motor controller 500 is fixed through a casing of the generator 300, so that the integrated electric-motor controller 500 is connected and fixed more reliably.

In the driving assembly 1 of the present disclosure, the range of the engine 100 is extended by using the speed increaser 910. When a vehicle runs at a high speed, the generator 300 and the driving electric motor 900 may drive the vehicle collaboratively, thereby avoiding a case in which the engine 100 drives the vehicle alone. In this way, the power of the engine 100 can be appropriately reduced, so that an air inlet volume of the engine 100 can be reduced, thereby reducing a required cooling amount for exhaust gas of the engine 100.

For example, the generator 300 may be directly connected to the driving electric motor 900, and power generated by the generator 300 can be directly used by the driving electric motor 900. Alternatively, the generator 300 may be connected to the energy storage device 920. Electricity generated by the generator 300 is stored in the energy storage device 920. The energy storage device 920 supplies power to the driving electric motor 900, and the driving electric motor 900 may be configured to drive the vehicle to move. In addition, when the engine 100 drives the vehicle to travel, excess power output may drive the generator 300 to generate electricity. This can keep the engine 100 in a high-efficiency operating range, and can reduce the energy consumption of the vehicle, thereby improving the mileage of the vehicle.

In this way, the driving assembly 1 according to the embodiments of the present disclosure has advantages such as a light weight, a compact structure, high space utilization, and low energy consumption.

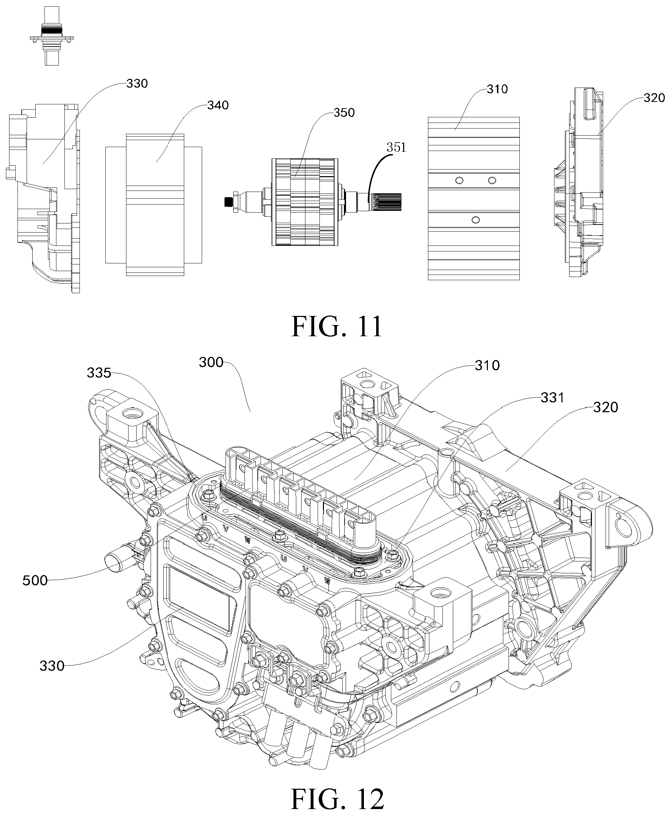

In some specific embodiments of the present disclosure, as shown in FIG. 11 and FIG. 12, the generator 300 includes a housing 310, a first end cap 320, a second end cap 330, a stator 340, a rotor 350, and a rotor bearing 351.

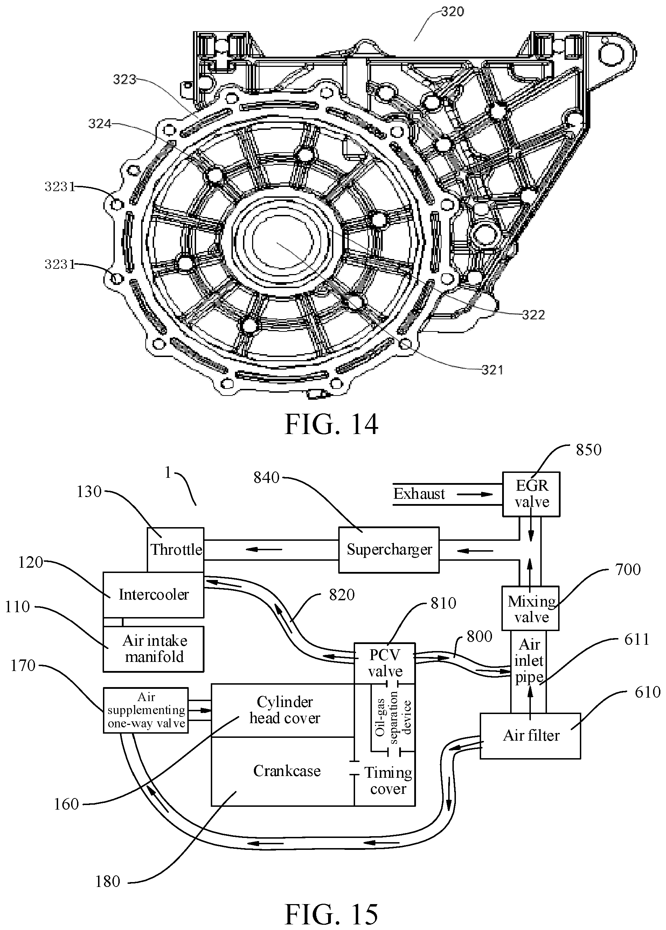

With reference to FIG. 14, the first end cap 320 is mounted at one end of the housing 310 to seal and cover the one end of the housing 310. The first end cap 320 is provided with a rotor bearing chamber 321. The second end cap 330 is mounted at the other end of the housing 310 to seal and cover the other end of the housing 310. The stator 340 and the rotor 350 are mounted in the housing 310, and the rotor 350 is rotatable with respect to the stator 340. The rotor bearing 351 is arranged on the rotor 350 and is arranged in the rotor bearing chamber 321. The integrated electric-motor controller 500 is mounted at the first end cap 320 and the second end cap 330.

The first end cap 320 may be configured with a generator casing mounting structure 3231. The first end cap 320 is suitable for being mounted at the one end of the housing 310 by the generator casing mounting structure 3231 to cover the one end of the housing 310.

Specifically, the second end cap 330 and the first end cap 320 respectively cover two opposite ends of the housing 310 of the generator 300, and the second end cap 330 and the first end cap 320 may be fixedly connected to the housing 310 of the generator 300 by bolts. The rotor 350 is rotatable with respect to the rotor bearing chamber 321 through the rotor bearing 351, so that a rotational friction force of the rotor 350 can be reduced, and the stator 340 can be mounted in the housing 310 in an interference fit.

The rotor 350 may include a rotating shaft, a rotor core, a magnetic isolation baffle, and the like. The rotor core is press-fitted on the rotating shaft. The rotor bearing 351 is sleeved over the rotating shaft. The rotating shaft may be matched with the rotating shaft of the speed increaser through a spline. The speed increaser drives the rotor 350 of the generator 300 to rotate through the spline, so that the stator 340 of the generator 300 cuts magnetic lines of force to generate a current.

In some specific embodiments of the present disclosure, as shown in FIG. 12, FIG. 13, and FIG. 16, the second end cap 330 is configured with a controller interface 332. The controller interface 332 is configured to connect the integrated electric-motor controller 500 and the generator 300 and connect the integrated electric-motor controller 500 and the driving electric motor 900.

For example, in some specific embodiments of the present disclosure, as shown in FIG. 12, FIG. 13, and FIG. 16, the second end cap 330 is configured with a controller mounting position 331 and the controller interface 332. A first wire holder 333 and a second wire holder 334 are mounted on the second end cap 330.

The controller interface 332 is respectively in communication with the first wire holder 333 and the second wire holder 334. The integrated electric-motor controller 500 is mounted at the controller mounting position 331 through the first wire holder 333 and the second wire holder 334. The integrated electric-motor controller 500 includes a generator control module and a driving electric motor control module. A terminal of the generator control module and a terminal of the driving electric motor control module are led into the controller interface 332. The first wire holder 333 is connected to and electrically communicates the terminal of the generator control module and a terminal of the stator 340. The second wire holder 334 is connected to and electrically communicates the terminal of the driving electric motor control module and a wire harness of the driving electric motor 900.

In other words, the integrated electric-motor controller 500 may be in communication with the first wire holder 333 through the controller interface 332. The integrated electric-motor controller 500 may also be in communication with the second wire holder 334 through the controller interface 332. In addition, the terminal of the generator control module can be in communication with the terminal of the stator 340 through the first wire holder 333. The terminal of the driving electric motor control module can be in communication with the wire harness of the driving electric motor 900 through the second wire holder 334. In this way, positions of the terminal of the generator control module and the terminal of the driving electric motor control module are less likely to interfere with each other, and the connection is more convenient.

For example, the second end cap 330 may be configured with a first wiring cavity and a second wiring cavity. The first wire holder 333 is located in the first wiring cavity and is in communication with the controller interface 332. The second wire holder 334 is located in the second wiring cavity and is in communication with the controller interface 332.

In this way, the first wire holder 333 is arranged in the first wiring cavity, and the second wire holder 334 is arranged in the second wiring cavity, so that the first wire holder 333 and the second wire holder 334 do not additionally increase a volume of the second end cap 330, which is conducive to miniaturization of the second end cap 330, and makes the structure of the second end cap 330 more compact. In addition, the first wiring cavity may accommodate and protect the first wire holder 333, and the second wiring cavity may accommodate and protect the second wire holder 334, to keep the first wire holder 333 and the second wire holder 334 from being exposed, thereby improving the safety of the electrical connection. In addition, the integrated electric-motor controller 500 and the generator 300 do not need to be connected by a high-voltage wire harness, so that costs can be reduced.

In addition, the first end cap 320 and the second end cap 330 are respectively provided with two mounting threaded holes for fixing the integrated electric-motor controller 500. The two threaded holes are respectively at two end positions of the second end cap 330 and the first end cap 320, and the integrated electric-motor controller 500 may be fixed on the first end cap 320 and the second end cap 330 by four M12x35 bolts.

Therefore, the generator control module may be in electrical communication with three-phase terminals of the generator 300. The driving electric motor control module may be in electrical communication with the high-voltage wire harness of the driving electric motor 900. The generator control module may control the generator 300 to operate. The driving electric motor control module may control the driving electric motor to operate. In this way, the generator 300 and the driving electric motor 900 are controlled by the same integrated electric-motor controller 500, and the generator 300 and the driving electric motor 900 may be two separately arranged electric motors. The integrated electric-motor controller 500 can control the generator 300 and the driving electric motor 900, so that a quantity of parts of the integrated electric-motor controller 500 is reduced, and the integrated electric-motor controller 500 has lower costs and a lighter weight.

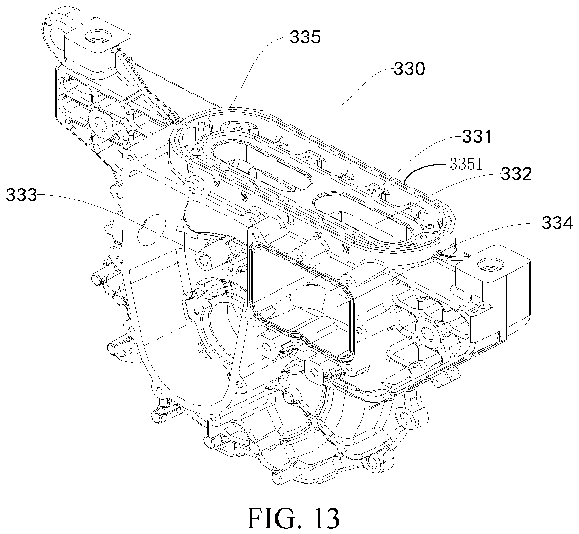

In some specific embodiments of the present disclosure, as shown in FIG. 13, the second end cap 330 is configured with a sealing groove 335 arranged around the controller interface 332. A sealing ring 3351 is mounted in the sealing groove 335. The sealing ring 3351 seals a gap between the integrated electric-motor controller 500 and the second end cap 330. The sealing ring may be an O-ring.

For example, the sealing groove 335 may have a width of 3 mm and may have a depth of 1.8 mm. The sealing groove 335 may extend along a circumferential direction of the controller interface 332. The sealing ring in the sealing groove 335 may seal the integrated electric-motor controller 500 and the second end cap 330. The mounting of the sealing ring is pre-positioned through the sealing groove 335, thereby making mounting more convenient, and providing high sealing reliability of the sealing ring.

In some specific embodiments of the present disclosure, as shown in FIG. 14, a bearing bush 322 is mounted in the rotor bearing chamber 321. The bearing bush 322 is sleeved over the rotor bearing 351. A thermal expansion coefficient of the bearing bush 322 is closer to a thermal expansion coefficient of the rotor bearing 351 of the generator 300 than a thermal expansion coefficient of the first end cap 320. To be specific, a degree of proximity between the thermal expansion coefficient of the bearing bush 322 and the thermal expansion coefficient of the rotor bearing 351 is greater than a degree of proximity between the thermal expansion coefficient of the first end cap 320 and the thermal expansion coefficient of the rotor bearing 351.

For example, the thermal expansion coefficient of the bearing bush 322 is close to or the same as the thermal expansion coefficient of the rotor bearing 351 of the generator 300, and the bearing bush 322 and the generator 300 may be made of a same material. For example, the bearing bush 322 may be made of a steel material, the rotor bearing 351 may be made of a steel material, and the first end cap 320 for a range extender may be made of an aluminum material, so that adverse impact caused by different materials of the rotor bearing chamber 321 and the rotor bearing 351 can be eliminated.

In this way, even if the generator 300 operates in a high rotational speed operating condition for a long time and the temperature of the rotor bearing chamber 321 is high, a size expansion of the bearing bush 322 may be close to or the same as a size expansion of an outer ring of the rotor bearing 351, and the bearing bush 322 can remain stably and reliably matched with the outer ring of the rotor bearing 351, to avoid an excessively large gap amount between the outer ring of the rotor bearing 351 and the bearing bush 322, and avoid excessive deviation of the outer ring of the rotor bearing 351 in an axial direction of the outer ring, so that the rotor bearing 351 has a low probability of damage, thereby ensuring normal use of the generator 300.

In some specific embodiments of the present disclosure, the first end cap 320 is configured with an annular generator mounting platform 323 and multiple reinforcing ribs 324.

The annular generator mounting platform 323 surrounds the rotor bearing chamber 321. The annular generator mounting platform 323 is configured with the generator casing mounting structure 3231. The multiple reinforcing ribs 324 are respectively connected to the annular generator mounting platform 323 and are arranged at intervals along a circumferential direction of the rotor bearing chamber 321.

Specifically, the annular generator mounting platform 323 may protrude from a side of the first end cap 320 facing the generator 300. Through the arrangement of the annular generator mounting platform 323, assembly of the generator 300 and the first end cap 320 can be pre-positioned, so that assembly steps of the first end cap 320 and the generator 300 can be simplified, thereby making assembly more convenient. In addition, the annular generator mounting platform 323 may further surround the rotor bearing chamber 321 in the circumferential direction of the rotor bearing chamber 321, and then may cover the rotor bearing chamber 321 in the circumferential direction of the rotor bearing chamber 321, which helps to protect the rotor bearing chamber 321 and avoid interference between other components and the rotor bearing 351.

In addition, through the arrangement of the multiple reinforcing ribs 324, the structural strength of the rotor bearing chamber 321 and the structural strength of the annular generator mounting platform 323 can be improved, the force bearing capability of the rotor bearing chamber 321 is stronger, the force bearing capability of the annular generator mounting platform 323 is also stronger, and the connection strength between the annular generator mounting platform 323 and the first end cap 320 can also be improved. In this way, the rotor bearing chamber 321 is unlikely to be deformed or damaged, to prolong the service life of the first end cap 320. In addition, the annular generator mounting platform 323 can more reliably fix the housing 310 of the generator 300, which helps to improve the connection strength between the housing 310 of the generator 300 and the first end cap 320.

In some specific embodiments of the present disclosure, as shown in FIG. 1 to FIG. 10 and FIG. 15, the engine 100 includes an air intake manifold 110, an intercooler 120, and a throttle 130.

The intercooler 120 is provided with a first air inlet 121 and an air outlet 122. The air outlet 122 is in communication with the air intake manifold 110.

The temperature of exhaust discharged by the engine 100 is high, and the temperature of entering gas is increased due to the pressure increasing of a supercharger 840 described below. In addition, in a process in which air is compressed, the density of the air increases, and the temperature of air discharged by the supercharger 840 also increases. As the gas pressure increases, the density of oxygen decreases, which greatly affects the combustion effective efficiency of the engine 100. Therefore, tail gas is cooled by using the intercooler 120, and then the cooled air enters an engine cylinder block 140 through the air intake manifold 110 and is mixed with fuel for combustion to release energy, so that thermal load of the engine 100 can be greatly reduced, to improve an air inlet volume, thereby improving the combustion effective efficiency of the engine 100, and improving the power performance of the vehicle. In addition, the air outlet 122 of the intercooler 120 is directly in communication with the air intake manifold 110, so that the structure formed by the intercooler 120 and the air intake manifold 110 has a high integration level, which is more conducive to the arrangement of the intercooler 120 in a compartment of the engine 100 with a limited space.

In addition, the throttle 130 is arranged at the first air inlet 121, and may control an air inlet volume of the first air inlet 121, so that an air inlet volume of the intercooler 120 can be precisely controlled, making the air inlet volume of the intercooler 120 close to or the same as a required volume of the engine 100, and it can be ensured that air that enters the air intake manifold 110 can be fully burned, thereby ensuring the combustion effective efficiency of the engine 100, and greatly reducing fuel consumption.

In addition, compared with an existing engine, in the engine 100 of the present disclosure, the air inlet volume of the intercooler 120 can be controlled through the throttle 130 according to different operating conditions and different air inlet volume requirements. In addition, with such an arrangement, a volume of air that needs to be cooled by the intercooler 120 is reduced, so that the volume of the intercooler 120 can be reduced, making the structural arrangement of the engine 100 more compact, a space arrangement requirement of a small engine compartment of the engine 100 can be met, and great convenience is provided for the freedom of overall vehicle design.

In addition, the throttle 130 may be mounted between an air inlet pipe 611 and the intercooler 120, to fully utilize an arrangement space between the air inlet pipe 611 and the intercooler 120, so that an overall height is not increased. In addition, through the adjustment of the openness of the throttle 130, the air inlet volume of the intercooler 120 can be adjusted to adequately meet an air inlet volume required by the engine 100. In this way, a problem of wasting an internal space of the intercooler 120 is avoided, so that the volume of the intercooler 120 is relatively small for better matching and arrangement in the engine compartment of the engine 100.

In addition, a flange structure is formed at an edge of the first air inlet 121 of the intercooler 120, and a flange structure adapting to the edge of the first air inlet 121 is formed at an end of the throttle 130, so that an end of the throttle 130 and the edge of the first air inlet 121 are fixedly connected by a flange.

In some specific embodiments of the present disclosure, as shown in FIG. 1, the engine 100 further includes the engine cylinder block 140 and a cylinder head 150.

The air intake manifold 110 is in communication with the engine cylinder block 140. The cylinder head 150 covers above the engine cylinder block 140. A mounting bracket 151 is arranged on the cylinder head 150. In an up-down direction, the intercooler 120 is located above the air intake manifold 110. The mounting bracket 151 is fixedly connected to at least one of the intercooler 120 and the throttle 130.

Therefore, the engine 100 is in communication with the air intake manifold 110, so that air cooled in the intercooler 120 enters the engine cylinder block 140 through the air intake manifold 110 for complete combustion. In addition, the intercooler 120 with a small volume is arranged above the air intake manifold 110, so that the entire mounting structure is compact, which is conducive to the overall layout design of the engine 100, and reduces costs. In addition, the mounting bracket 151 is arranged on the cylinder head, and may be configured to fixedly connect at least one of the intercooler 120 and the throttle 130. In this way, the mounting modality of the entire intercooler 120 can be effectively improved, and the vibration of the intercooler 120 is reduced, thereby improving noise, vibration, and harshness (NVH) performance.

Specifically, the mounting bracket 151 is fixed at the cylinder head 150, and is connected to the throttle 130, so that the throttle 130 can be better and stably mounted at the first air inlet 121 of the intercooler 120. In addition, multiple fixing brackets may be arranged at intervals on the air intake manifold 110, and the air intake manifold 110 can be reliably fixed on the engine cylinder block 140 or a frame through the fixing brackets, so that the mounting modality of the engine 100 can be improved, thereby improving the NVH performance. In addition, a mounting hole is provided in the mounting bracket 151. One end of the mounting bracket 151 may be fixedly connected to the flange structure on the throttle 130, and the other end of the mounting bracket 151 may be fixedly connected to the cylinder head 150 by a fastener, so that the throttle 130 is fixed more reliably.

In some specific embodiments of the present disclosure, as shown in FIG. 1 and FIG. 3 to FIG. 5, the intercooler 120 includes an intercooler body 123, an air inlet cavity 124, and an air outlet cavity 128.

The intercooler body 123 is arranged between the air inlet cavity 124 and the air outlet cavity 128 and in communication with each of the air inlet cavity 124 and the air outlet cavity 128. The first air inlet 121 is opened in the air inlet cavity 124. The air outlet 122 is opened in the air outlet cavity 128.

In other words, one end of the intercooler body 123 is in communication with the air inlet cavity 124, and the first air inlet 121 is opened in the air inlet cavity 124. After entering the air inlet cavity 124 through the first air inlet 121, gas is buffered in the air inlet cavity 124. Therefore, when entering the intercooler body 123 from the air inlet cavity 124, gas can enter the intercooler body 123 slowly and uniformly for cooling, to avoid a case of stress concentration due to a nonuniform flow rate of the gas.

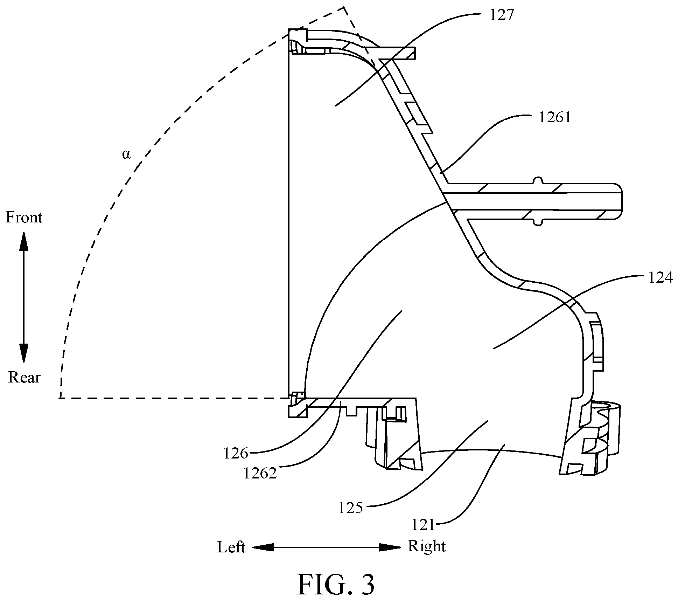

Further, as shown in FIG. 3, the first air inlet 121 may be opened in a side of the air inlet cavity 124. A smooth transition is provided at a corner of an inner wall of the air inlet cavity 124, so that gas is unlikely to undergo great disturbance in the air inlet cavity 124, so that the uniformity of the flow rate of the gas and the smoothness of the gas entering a flow passage of the intercooler body 123 can be effectively ensured, thereby improving cooling performance.

In addition, the other end of the intercooler body 123 is connected to the air outlet cavity 128, and the air outlet 122 is opened in the air outlet cavity 128. In this way, gas can slowly and uniformly enter the air intake manifold 110. In addition, a smooth transition at a corner of an inner wall of the air outlet cavity 128 is similar to that of the air inlet cavity 124, so that it can be effectively ensured that gas enters the air intake manifold 110 with a uniform flow rate, to eventually fully burn with fuel in the engine cylinder block 140, thereby improving combustion efficiency.

In some specific embodiments of the present disclosure, as shown in FIG. 3, the air inlet cavity 124 is provided with a first air inlet section 125, a second air inlet section 126, and a third air inlet section 127 sequentially in communication.

The first air inlet section 125 is in communication with the first air inlet 121, and the third air inlet section 127 is in communication with the intercooler body 123, to uniformly guide gas into the intercooler body 123. With such an arrangement, gas may sequentially pass through the first air inlet section 125, the second air inlet section 126, and the third air inlet section 127 to uniformly enter the intercooler body 123.

A cross-sectional area of the third air inlet section 127 is greater than a cross-sectional area of the first air inlet section 125. A cross-sectional area of the second air inlet section 126 gradually increases from the first air inlet section 125 to the third air inlet section 127. With such an arrangement, the cross-sectional area of the first air inlet section 125 is small, the cross-sectional area of the second air inlet section 126 gradually increases and may gradually become equal to the cross-sectional area of the third air inlet section 127. An appearance of the air inlet cavity 124 gradually increases in an air inlet direction. In this way, gas slowly enters from the first air inlet section 125, and because the second air inlet section 126 gradually expands to the third air inlet section 127, the gas can uniformly enter the intercooler body 123.

In addition, a spacing between a front side wall 1261 and a rear side wall 1262 of the second air inlet section 126 gradually increases from right to left. An angle between the front side wall 1261 and the rear side wall 1262 of the second air inlet section 126 is α. α satisfies a relation formula: 50° ≤ α ≤ 70°.

In this way, in the air inlet direction, instead of a conventional boss structure, the air inlet cavity 124 is formed by the first air inlet section 125, the second air inlet section 126, and the third air inlet section 127 sequentially in communication. The cross-sectional area of the first air inlet section 125 is small, and the cross-sectional area of the second air inlet section 126 gradually increases and gradually becomes equal to the cross-sectional area of the third air inlet section 127. In addition, the angle α between the front side wall 1261 and the rear side wall 1262 of the second air inlet section 126 is set to 50° to 70°. In a front-back direction, gas can slowly and uniformly enter the first air inlet section 125, the second air inlet section 126, and the third air inlet section 127 sequentially, i.e., is uniformly distributed in the air inlet cavity 124, so that the gas uniformly enters the intercooler body 123 for quick cooling, thereby effectively improving the gas intake uniformity of the intercooler 120. Compared with an existing intercooler structure, the gas intake uniformity of the intercooler 120 is improved by over 10%, and cooling performance is improved by 2% to 3% or more.

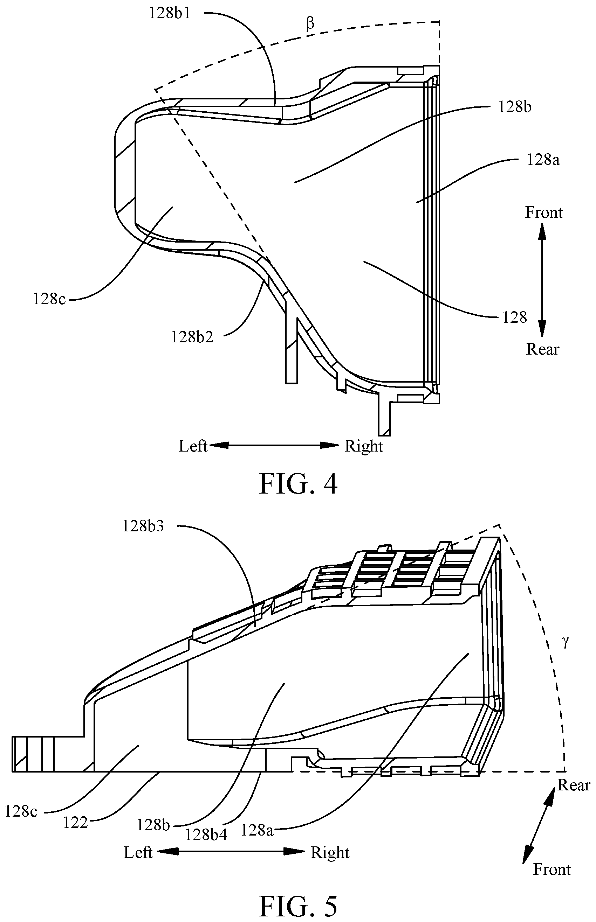

Further, as shown in FIG. 4, the air outlet cavity 128 is provided with a first air outlet section 128a, a second air outlet section 128b, and a third air outlet section 128c sequentially in communication.

The first air outlet section 128a is in communication with the air outlet 122, and the third air outlet section 128c is in communication with the intercooler body 123, to uniformly guide gas into the air intake manifold 110. With such an arrangement, gas cooled in the intercooler body 123 may sequentially pass through the first air outlet section 128a, the second air outlet section 128b, and the third air outlet section 128c to uniformly enter the air intake manifold 110, so that the gas uniformly enters the engine cylinder block 140 for complete combustion.

A cross-sectional area of the third air outlet section 128c is less than a cross-sectional area of the first air outlet section 128a. A cross-sectional area of the second air outlet section 128b gradually decreases from an end close to the first air outlet section 128a to an end close to the third air outlet section 128c. With such an arrangement, in an air outlet direction, the cross-sectional area of the first air outlet section 128a is large, and the cross-sectional area of the second air outlet section 128b gradually decreases and decreases to be equal to the cross-sectional area of the third air outlet section 128c, so that the air outlet cavity 128 has a shape of gradually decreasing in the air outlet direction. In this way, after a large amount of gas enters the first air outlet section 128a, because the second air outlet section 128b gradually decreases to the third air outlet section 128c, the gas can uniformly enter the air intake manifold 110.

In addition, a spacing between a front side wall 128b 1 and a rear side wall 128b2 of the second air outlet section 128b gradually decreases from right to left. An angle between the rear side wall 128b2 of the second air outlet section 128b and a cross-section of the air outlet cavity 128 is β. β satisfies a relation formula: 20° ≤ β ≤ 40°.

In this way, in the air outlet direction, the cross-sectional area of the first air outlet section 128a is large, the cross-sectional area of the second air outlet section 128b gradually decreases and decreases to be equal to the cross-sectional area of the third air outlet section 128c, and the angle β between the rear side wall 128b2 of the second air outlet section 128b and the cross-section of the air outlet cavity 128 is set to 20° to 40°, so that gas can sequentially pass through the first air outlet section 128a, the second air outlet section 128b, and the third air outlet section 128c, and can slowly and uniformly flow into the air intake manifold 110, which helps to reduce a flow rate of the gas in the air intake manifold 110, thereby improving cooling efficiency of the intercooler 120, and improving cooling performance by 2% to 3% or even more.

In some specific embodiments of the present disclosure, as shown in FIG. 4, a spacing between an upper side wall 128b3 and a lower side wall 128b4 of the second air outlet section 128b gradually decreases from right to left. An angle between the upper side wall 128b3 and the lower side wall 128b4 of the second air outlet section 128b is γ. γ satisfies a relation formula: 25° ≤ γ ≤ 35°.

With such an arrangement, the angle γ between the upper side wall 128b3 and the lower side wall 128b4 of the second air outlet section 128b is set to 25° to 35°, which facilitates flowing of the gas at a uniform rate, reduces a loss in the flowing of the gas, and effectively reduces a pressure loss in the intercooler 120, thereby ensuring that an air inlet volume of the air intake manifold 110 is nearly the required volume of the engine 100. In addition, the angle between the rear side wall 128b2 of the second air outlet section 128b and the cross-section of the air outlet cavity 128 is set to β in combination, so that gas flows slowly and uniformly, thereby further improving the cooling efficiency of the intercooler 120.

In some specific embodiments of the present disclosure, a gas storage capacity of the intercooler body 123 is V1, and V1 satisfies a relation formula: 1200 ml ≤ V1 ≤ 1300 ml. With such an arrangement, a range of the air inlet volume required by the engine 100 can be adequately met, and the volume of the intercooler body 123 can be limited in a particular range. In addition, according to the engine compartment of the engine 100 with a limited space, the volume of the intercooler body 123 can be adaptively set, to better integrally arrange the intercooler 120 in the engine compartment of the engine 100 without occupying an excessive space, and a particular arrangement space is provided for arranging other components, thereby effectively optimizing the space arrangement in the compartment of the engine 100.

For the intercooler 120, a maximum size in a length direction is a, a maximum size in a height direction is b, and a maximum size in a width direction is c. a, b, and c satisfy relation formulas: 320 mm ≤ a ≤ 380 mm, 45 mm ≤ b ≤ 60 mm, and 100 mm ≤ c ≤ 150 mm.

For example, the maximum size of the intercooler 120 in the length direction may be 320 mm, 330 mm, 340 mm, 350 mm, 360 mm, 370 mm or 380 mm. The maximum size of the intercooler 120 in the height direction may be 45 mm, 50 mm, 55 mm or 60 mm. The maximum size of the intercooler 120 in the width direction may be 100 mm, 110 mm, 120 mm, 130 mm, 140 mm or 150 mm.

It should be noted that the air inlet volume requiring cooling of the intercooler 120 of the driving assembly 1 of the present disclosure is small, a volume parameter of the intercooler 120 can be reduced, and can be reduced by approximately 1/3 to 1/4 compared with a volume parameter of a conventional intercooler. In this way, when a required volume of the engine 100 is met, an overall volume of a power system can be effectively reduced, product costs are reduced, and a sufficient arrangement space can be provided for the engine compartment of the engine. Especially in a case that an arrangement space of a hybrid model is compact, the intercooler 120 with a small volume is very applicable.

Certainly, the volume parameter of the intercooler 120 is not limited to the foregoing values. The volume parameter of the intercooler 120 may be set according to a designed required air inlet volume.

In some specific embodiments of the present disclosure, as shown in FIG. 1 to FIG. 6, the driving assembly 1 further includes an elastic support member 600. The air intake manifold 110 includes an upper manifold piece 111 and a lower manifold piece 113.

The upper manifold piece 111 is arranged above the lower manifold piece 113. A first mounting piece 112 is arranged on the upper manifold piece 111. A second mounting piece 114 is arranged on the lower manifold piece 113. The first mounting piece 112 is higher than the second mounting piece 114. The intercooler 120 is arranged above the upper manifold piece 111 and fixedly connected to each of the first mounting piece 112 and the second mounting piece 114. The elastic support member 600 is arranged on the upper manifold piece 111 and elastically abuts against and matches the intercooler 120.

Specifically, the intercooler 120 is directly connected to the air intake manifold 110. The first mounting piece 112 is arranged on the upper manifold piece 111, and the second mounting piece 114 is arranged on the lower manifold piece 113. When the intercooler 120 is in communication with the air intake manifold 110, the intercooler 120 may be arranged above the upper manifold piece 111 and fixedly connected to each of the first mounting piece 112 and the second mounting piece 114, so that the fixed connection between the intercooler 120 and the air intake manifold 110 can be implemented, making it simpler to assemble the engine 100, thereby ensuring normal operation of the engine 100.

In addition, the first mounting piece 112 is arranged higher than the second mounting piece 114. When the intercooler 120 is arranged above the upper manifold piece 111, the lower manifold piece 113 can share load from the intercooler 120, to keep the upper manifold piece 111 from bearing excessive load from the intercooler 120, so that a maximum bearing capability of the air intake manifold 110 can be improved.

In addition, the elastic support member 600 is arranged on the upper manifold piece 111, to make the elastic support member 600 elastically abut against and match the intercooler 120. When the vehicle vibrates, the elastic support member 600 can provide particular support for the intercooler 120, so that a force applied by the intercooler 120 to the air intake manifold 110 can be more uniform. In this way, the service life of the second mounting piece 114 can be prolonged, and the reliability of the engine 100 is improved. In addition, friction between the intercooler 120 and the air intake manifold 110 and consequent noise can be avoided, so that the NVH performance of the engine 100 can be improved.

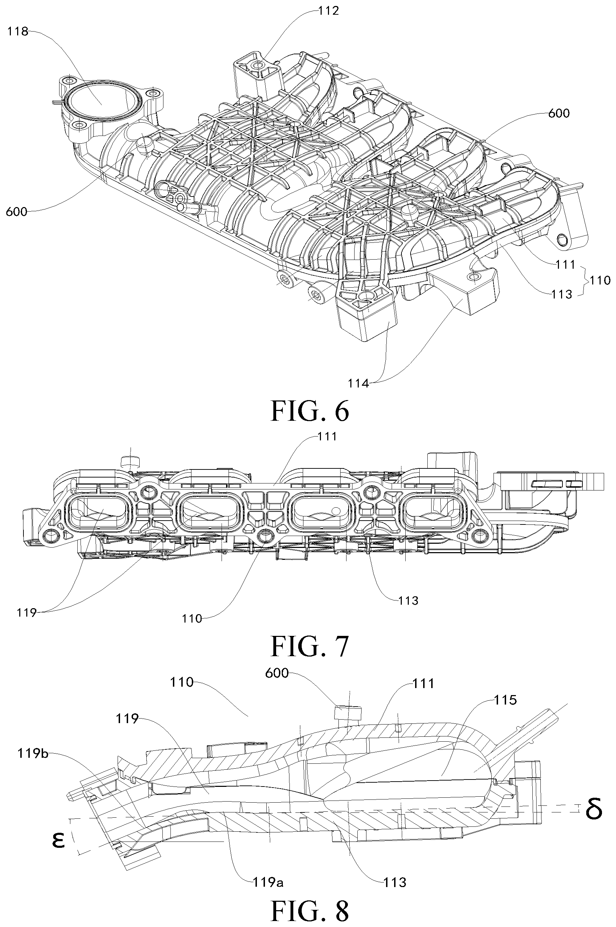

In some specific embodiments of the present disclosure, as shown in FIG. 8, the air intake manifold 110 is provided with a pressure stabilizing cavity 115 and an air inlet passage 119.

One end of the air inlet passage 119 is in communication with the pressure stabilizing cavity 115, and the other end of the air inlet passage 119 is in communication with the engine 100. A bottom wall of the air inlet passage 119 includes a first wall section 119a. The first wall section 119a is connected to a bottom wall of the pressure stabilizing cavity 115 and is arranged obliquely downward with respect to the bottom wall of the pressure stabilizing cavity 115. An angle δ is formed between the first wall section 119a and the bottom wall of the pressure stabilizing cavity 115. 2° ≤ δ ≤ 5°.

In this way, gas that enters the air intake manifold 110 can be first buffered in the pressure stabilizing cavity 115, and then is guided into cylinders of the engine 100 through the air inlet passage 119, so that normal operation of the air intake manifold 110 can be implemented. In addition, the angle is formed between the first wall section 119a of the air inlet passage 119 and the bottom wall of the pressure stabilizing cavity 115, and condensed water can naturally flow downward along a second wall section 119b under the action of gravity, so that condensed water can be further kept from accumulating at the pressure stabilizing cavity 115 and the air inlet passage 119, and the operating performance of the engine 100 can be further improved.

In addition, 2° ≤ δ ≤ 5°, so that the angle of the bottom wall of the pressure stabilizing cavity 115 being downward obliquely with respect to the first wall section 119a is set within an appropriate range. In this way, in one aspect, an angle between the bottom wall of the pressure stabilizing cavity 115 and the bottom wall of the air inlet passage 119 can be kept from being excessively small, to ensure that condensed water can naturally flow to the bottom wall of the air inlet passage 119 along the bottom wall of the pressure stabilizing cavity 115, thereby keeping condensed water from accumulating in the pressure stabilizing cavity 115. In another aspect, the angle between the bottom wall of the pressure stabilizing cavity 115 and the bottom wall of the air inlet passage 119 can be kept from being excessively large, to improve the buffering effect of the pressure stabilizing cavity 115 for gas. In this way, the structural design of the air intake manifold 110 can be optimized, so that it can be ensured that the air intake manifold 110 operates normally, and condensed water can be kept from accumulating in the air intake manifold 110, so that the operating performance of the engine 100 can be improved.

Further, as shown in FIG. 8, the bottom wall of the air inlet passage 119 further includes the second wall section 119b.

The second wall section 119b is connected to a side of the first wall section 119a away from the pressure stabilizing cavity 115. The second wall section 119b is arranged obliquely downward with respect to the first wall section 119a. An angle ε is formed between the second wall section 119b and the first wall section 119a. 24° ≤ ε ≤ 26.

Therefore, the angle between the second wall section 119b and the first wall section 119a may be set within an appropriate range. In this way, the angle of the second wall section 119b being downward obliquely with respect to the first wall section 119a may be set to be appropriate, so that when condensed water flows to the second wall section 119b from the first wall section 119a, a flow rate of the condensed water can be controlled within an appropriate range, making the flowing of the condensed water on the second wall section 119b stabler and smoother.

It should be noted that a connection between the first wall section 119a and the second wall section 119b may be arc-shaped. In this way, the first wall section 119a and the second wall section 119b may be connected by a smooth transition, so that a flow path of condensed water can be smoother, and the stability and smoothness of condensed water flowing on the bottom wall of the air inlet passage 119 can be further improved.

In addition, the angle formed between the bottom wall of the pressure stabilizing cavity 115 and the bottom wall of the air inlet passage 119 and an angle formed between a tangent of the second wall section 119b and the first wall section 119a are further defined, so that the angle formed between the bottom wall of the pressure stabilizing cavity 115 and the bottom wall of the air inlet passage 119 and the angle formed between the tangent of the second wall section 119b and the first wall section 119a can be controlled within better ranges, and the structural design of the air intake manifold 110 can be further optimized, thereby ensuring the normal operation of the air intake manifold 110, and further improving the operating performance of the engine 100.

In some specific embodiments of the present disclosure, a volume of the pressure stabilizing cavity 115 is V2, and V2 satisfies a relation formula: 1 L < V2 < 1.2 L.

In this way, the volume of the pressure stabilizing cavity 115 may be set within an appropriate range, so that on the premise of ensuring the structural compactness of the air intake manifold 110, the pressure stabilizing cavity 115 can effectively buffer gas that enters the air intake manifold 110, and stable gas enters the engine 100 through the air inlet passage 119, thereby ensuring the normal operation of the engine 100, and improving the operating performance of the engine 100.

In some specific embodiments of the present disclosure, a length of the air inlet passage 119 is L, and L satisfies a relation formula: 70 mm < L < 80 mm. The length of the air inlet passage 119 means an extension length of the air inlet passage 119 in the air inlet direction, i.e., a sum of lengths of the first wall section 119a and the second wall section 119b. With such an arrangement, the length of the air inlet passage 119 may be set within an appropriate range. When the engine 100 operates in a high-speed range, the power and torque can be improved, and fuel consumption can be reduced, so that the structural design of the air intake manifold 110 can be further optimized, thereby improving the operating performance of the engine 100.

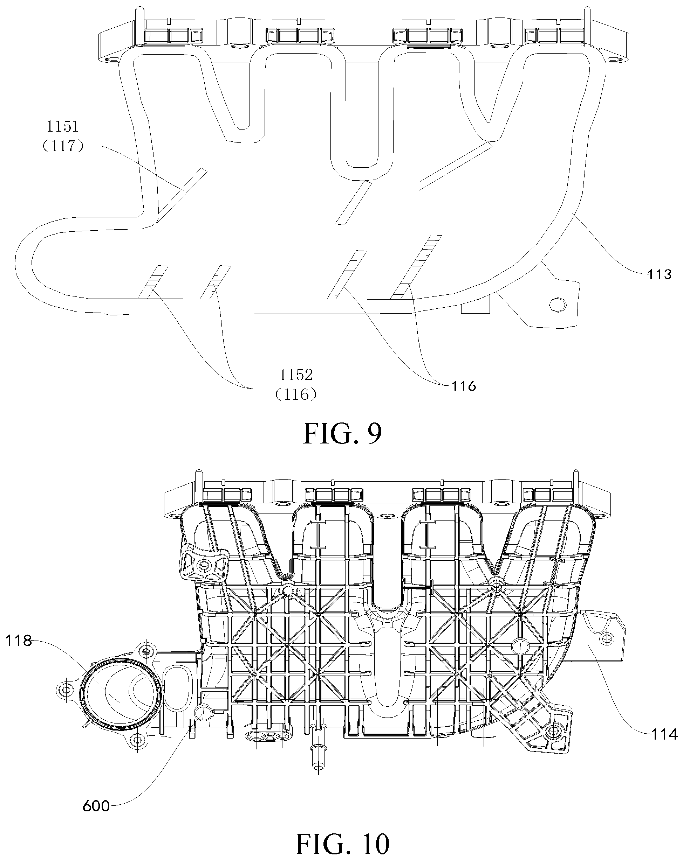

In some specific embodiments of the present disclosure, as shown in FIG. 9, the pressure stabilizing cavity 115 is provided with an impact separation piece 1151 and a flow guiding piece 1152.

The impact separation piece 1151 is located in the pressure stabilizing cavity 115, to impact entering gas to reduce generation of condensed water. The flow guiding piece 1152 is arranged in the pressure stabilizing cavity 115, to guide condensed water in the pressure stabilizing cavity 115 to the air inlet passage 119. In this way, condensed water that enters the pressure stabilizing cavity 115 can impact the impact separation piece 1151, so that condensed water that flows quickly can spread to different positions of the pressure stabilizing cavity 115, and a flow rate of condensed water can be reduced. In addition, when the condensed water in the pressure stabilizing cavity 115 flows into the air inlet passage 119, the flow guiding piece 1152 can guide condensed water into the air inlet passage 119, so that the flowing of condensed water is stabler, a flow of condensed water that enters the air inlet passage 119 is more uniform, flows of condensed water that enters the cylinders through the air inlet passage 119 can be more uniform, and the operating performance of the engine 100 can be improved.

Further, as shown in FIG. 9, the impact separation piece 1151 is an impact grid 116, and the flow guiding piece 1152 includes multiple flow guiding baffles 117.

As shown in FIG. 9 and FIG. 10, the pressure stabilizing cavity 115 is provided with a second air inlet 118. The impact grid 116 corresponds to the second air inlet 118, to impact entering gas to reduce generation of condensed water at the second air inlet 118. The impact grid 116 mainly impacts and rubs entering gas at the second air inlet 118, so that heat can be generated to make the gas temperature of the entering gas rise, thereby reducing the generation of condensed water.

Multiple air inlet passages 119 are provided. Each flow guiding baffle 117 is arranged extending toward the air inlet passage 119. The multiple flow guiding baffles 117 guide condensed water in the pressure stabilizing cavity 115 to the multiple air inlet passages 119.

Specifically, the multiple air inlet passages 119 are correspondingly in communication with the cylinders of the engine 100. When gas in the intercooler 120 enters the pressure stabilizing cavity 115 through the second air inlet 118, the isolation of condensed water at the second air inlet 118 can be accelerated. A transition between the second air inlet 118 and the intercooler 120 may be "U"-shaped to accelerate the generation of condensed water. Condensed water may sequentially pass through the pressure stabilizing cavity 115 and the multiple air inlet passages 119 and correspondingly flow into combustion chambers of the cylinders. The impact grid 116 is arranged in the pressure stabilizing cavity 115, and the impact grid 116 corresponds to the second air inlet 118, so that condensed water that enters the pressure stabilizing cavity 115 can impact the impact grid 116, and condensed water that flows quickly can spread to different positions of the pressure stabilizing cavity 115, and the flow rate of condensed water can be reduced.

The multiple flow guiding baffles 117 are arranged, and the flow guiding baffles 117 are arranged extending toward the air inlet passages 119, so that when condensed water in the pressure stabilizing cavity 115 flows into the air inlet passages 119, the flow guiding baffles 117 can guide the condensed water into the air inlet passages 119. In this way, the flowing of condensed water can be stabler, and flows of condensed water that enters the air inlet passages 119 are more uniform, so that flows of condensed water that flows into the cylinders through the air inlet passages 119 are more uniform, and the operating performance of the engine 100 can be improved.

It should be noted that heights and widths of the impact grid 116 and the flow guiding baffles 117 should not be excessively large. In this way, the arrangement of the impact grid 116 and the flow guiding baffles 117 can be kept from affecting normal air intake of the air intake manifold 110, and the length and direction of the flow guiding baffles 117 can be adjusted according to an actual flow direction of condensed water inside the air intake manifold 110.

In some specific embodiments of the present disclosure, as shown in FIG. 1, FIG. 2, and FIG. 15, the driving assembly 1 further includes an air filter 610, a mixing valve 700, and a first vent tube 800.

The air filter 610 is connected to the air inlet pipe 611. An air inlet end 720 of the mixing valve 700 is in communication with the air inlet pipe 611. An air outlet end 710 of the mixing valve 700 is in communication with the throttle 130. A negative pressure at the air outlet end 710 of the mixing valve 700 is greater than a negative pressure at the air inlet end 720 of the mixing valve 700. One end of the first vent tube 800 is connected to a crankcase 180 of the engine 100, and the other end of the first vent tube 800 is connected to the air inlet pipe 611.

In other words, the mixing valve 700 is arranged between the throttle 130 and the air inlet pipe 611. Fresh air filtered by the air filter 610 is first introduced into the mixing valve 700 through the air inlet pipe 611. In addition, blow-by carrying oil gas in the crankcase 180 is also introduced into the air inlet pipe 611. The fresh air and the blow-by carrying oil gas are mixed in the air inlet pipe 611 to form mixed gas, which is introduced into the intercooler 120 through the mixing valve 700, and is eventually introduced into the engine cylinder block 140 for combustion.

The negative pressure at the air outlet end 710 of the mixing valve 700 is greater than the negative pressure at the air inlet end 720 of the mixing valve 700. It should be noted that the air outlet end 710 of the mixing valve 700 is generally connected to the supercharger 840, and a large negative pressure is formed at an entrance of the supercharger 840. Therefore, the negative pressure at the air outlet end 710 of the mixing valve 700 is greater than the negative pressure at the air inlet end 720 of the mixing valve 700. The air outlet end 710 of the mixing valve 700 is an end at which the mixed gas is discharged from the mixing valve 700. The air inlet end 720 of the mixing valve 700 is an end at which the mixed gas enters the mixing valve 700, i.e., a connection between the mixing valve 700 and the air inlet pipe 611. The negative pressure at the air outlet end 710 of the mixing valve 700 is large, and may be up to 15 kPa. The negative pressure at the air inlet end 720 of the mixing valve 700, i.e., the air inlet pipe 611, is small, and is approximately below 5 kPa. A negative pressure at the crankcase 180 is generally also below 5 kPa. The blow-by carrying oil gas in the crankcase 180 may be introduced into the air inlet pipe 611 through the first vent tube 800 and is mixed with fresh air to form mixed gas, which then passes through the mixing valve 700 and the intercooler 120 to enter the engine cylinder block 140 and can be removed through combustion. In addition, the other end of the first vent tube 800 is connected to the air inlet pipe 611. The negative pressure at the air outlet end 710 of the mixing valve 700 is greater than the negative pressure at the air inlet end 720 of the mixing valve 700. In this way, oil in the crankcase 180 can be kept from entering the air inlet pipe 611 due to a large negative pressure at the other end of the first vent tube 800, so that an oil loss in the crankcase 180 can be reduced.

In some specific embodiments of the present disclosure, as shown in FIG. 1 and FIG. 15, the driving assembly 1 further includes a vent valve 810 and a second vent tube 820.

The one end of the first vent tube 800 is connected to the crankcase 180 by the vent valve 810. One end of the second vent tube 820 is connected to the vent valve 810. The other end of the second vent tube 820 is connected to the intercooler 120. A vent load of the second vent tube 820 is less than a vent load of the first vent tube 800.

The vent valve 810 may control the ventilation of the crankcase 180. The vent valve 810 is in communication with the crankcase 180. For example, when a pressure in the air inlet pipe 611 is greater than a pressure in the crankcase 180, the vent valve 810 selects to make the crankcase 180 in communication with the first vent tube 800, and blow-by carrying oil gas in the crankcase 180 is introduced into the air inlet pipe 611 through the first vent tube 800 and is mixed with fresh air. When the pressure in the air inlet pipe 611 is not greater than the pressure in the crankcase 180, the vent valve 810 selects to make the crankcase 180 not in communication with the first vent tube 800.

In addition, one end of the second vent tube 820 is connected to the vent valve 810, and the other end of the second vent tube 820 is connected to the intercooler 120. When the pressure in the air inlet pipe 611 is greater than the pressure in the crankcase 180, because the vent load of the second vent tube 820 is less than the vent load of the first vent tube 800, in this case, the vent valve 810 selects to make the crankcase 180 in communication with the second vent tube 820, and blow-by carrying oil gas in the crankcase 180 is introduced into the intercooler 120 through the second vent tube 820 and is further introduced into the engine cylinder block 140 for combustion. In addition, the vent valve 810 can prevent gas in the air inlet pipe 611 from entering the crankcase 180 through the second vent tube 820 and the vent valve 810 at a positive pressure. In this way, the blow-by in the crankcase 180 can be discharged more appropriately, and a ventilation system of the crankcase 180 can operate normally.

In some specific embodiments of the present disclosure, as shown in FIG. 1, a height of the first vent tube 800 gradually decreases from one end to the other end of the first vent tube 800.

Specifically, one end of the first vent tube 800 is connected to the vent valve 810, and the other end of the first vent tube 800 is connected to the air inlet pipe 611. In a direction from the one end of the first vent tube 800 to the other end of the first vent tube 800, the height of the first vent tube 800 gradually decreases. In this way, a connection between the first vent tube 800 and the vent valve 810 is the highest point, so that a case that oil gas in the first vent tube 800 is cooled to form a liquid in a cold environment and flows back to the connection between the first vent tube 800 and the vent valve 810 and freezes can be avoided, thereby avoiding an excessive high pressure in the crankcase 180 due to blockage in the vent valve 810.

In some specific embodiments of the present disclosure, as shown in FIG. 1, a height of the second vent tube 820 gradually decreases from one end to the other end of the second vent tube 820.

Specifically, one end of the second vent tube 820 is connected to the vent valve 810, and the other end of the second vent tube 820 is connected to the intercooler 120. The height of the second vent tube 820 gradually decreases from the one end of the second vent tube 820 to the other end of the second vent tube 820. In this way, a connection between the second vent tube 820 and the vent valve 810 is the highest point, so that a case that oil gas in the second vent tube 820 is cooled to form a liquid in a cold environment and flows back to the connection between the second vent tube 820 and the vent valve 810 and freezes can be avoided, thereby avoiding an excessive high pressure in the crankcase 180 due to blockage in the vent valve 810.

In some specific embodiments of the present disclosure, as shown in FIG. 1, the driving assembly 1 further includes a thermal insulation jacket 830. The thermal insulation jacket 830 is sleeved over the first vent tube 800. The thermal insulation jacket 830 can implement thermal insulation. In this way, a case that oil gas in the first vent tube 800 is cooled to form liquid in a cold environment can be avoided, and blockage caused by freezing at the connection between the first vent tube 800 and the vent valve 810 can be avoided.

Certainly, the thermal insulation jacket 830 may also be sleeved over the second vent tube 820, so that a case that oil gas in the second vent tube 820 is cooled to form liquid in a cold environment can be avoided, and blockage caused by freezing at the connection between the second vent tube 820 and the vent valve 810 can be avoided.

In addition, a wall thickness of the thermal insulation jacket 830 ranges from 3 mm to 5 mm. In this way, the wall thickness of the thermal insulation jacket 830 can be kept from being excessively small, so that thermal insulation can be effectively implemented for the first vent tube 800, to keep the gas temperature in the first vent tube 800 from being excessively low. In another aspect, the wall thickness of the thermal insulation jacket 830 can be kept from being excessively large, so that a diameter after the thermal insulation jacket 830 is sleeved over the first vent tube 800 is not excessively large, which facilitates arrangement.

In some specific embodiments of the present disclosure, as shown in FIG. 1 and FIG. 15, the engine 100 includes a cylinder head cover 160 and an air supplementing one-way valve 170.

The cylinder head cover 160 is in communication with the crankcase 180. The air supplementing one-way valve 170 is arranged at the cylinder head cover 160 and in communication with each of the air filter 610 and the cylinder head cover 160.

Specifically, the air supplementing one-way valve 170 is in communication with the air filter 610. When gas is introduced from the second vent tube 820 into the air inlet pipe 611, the air filter 610 can introduce fresh air into the air supplementing one-way valve 170. The air supplementing one-way valve 170 is arranged at the cylinder head cover 160, and the cylinder head cover 160 is in communication with the crankcase 180. In this way, fresh air may be introduced into the crankcase 180, and fresh air can form a gas flow in the crankcase 180, so that blow-by in the crankcase 180 can be discharged together as much as possible, and it can be ensured that ventilation in the crankcase 180 is good, to avoid a high negative pressure in the crankcase 180. In addition, the air supplementing one-way valve 170 may be a one-way valve, to keep blow-by in the crankcase 180 from being discharged into the air filter 610, thereby prolonging the service life and improving operating performance of the air filter 610.

In some specific embodiments of the present disclosure, as shown in FIG. 1 and FIG. 15, the driving assembly 1 further includes the supercharger 840 and an exhaust circulation valve 850.

The mixing valve 700 is in communication with the throttle 130 through the supercharger 840. The exhaust circulation valve 850 is in communication with the throttle 130 through the supercharger 840. The exhaust circulation valve 850 is in communication with an exhaust manifold of the engine 100.

The supercharger 840 may increase the pressure and the temperature of mixed gas. The exhaust circulation valve 850 is mainly configured to control the introduction of exhaust, and the exhaust generally contains oil gas. After the mixed gas passes through the mixing valve 700, exhaust may also be mixed with the mixed gas again through the exhaust circulation valve 850. In this way, a proportion of oil gas in the mixed gas can be increased, so that a degree of mixing of oil gas and fresh air can be improved, to fully burn the mixed gas.

Certainly, the exhaust circulation valve 850 may also adjust a volume of exhaust that enters the engine 100, to ensure that a volume of oil gas in the mixed gas is within an appropriate range.

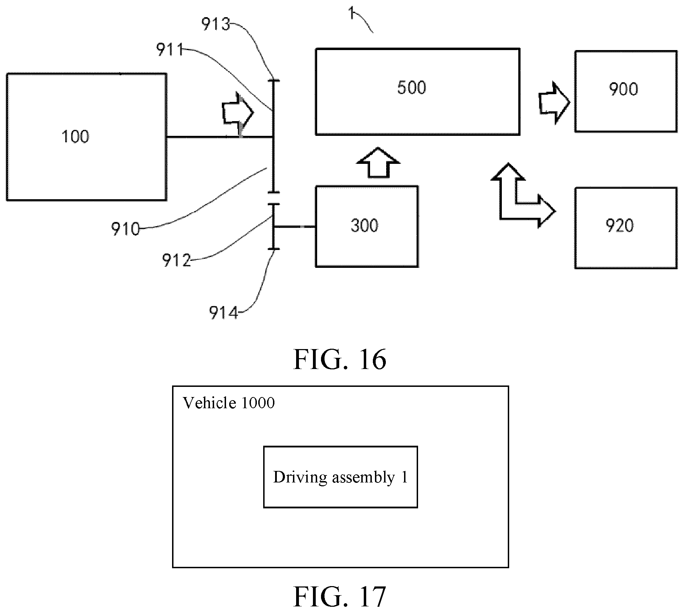

A vehicle 1000 according to an embodiment of the present disclosure is described below with reference to FIG. 17. The vehicle 1000 includes the driving assembly 1 according to the foregoing embodiment of the present disclosure.

Through the use of the driving assembly 1 according to the foregoing embodiment of the present disclosure, the vehicle 1000 according to the embodiment of the present disclosure has advantages such as a light weight, a compact structure, high space utilization, and low energy consumption.

Other compositions and operations of the driving assembly 1 and the vehicle including the driving assembly according to the embodiments of the present disclosure are known to those of ordinary skill in the art, and are not described herein again in detail.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily directed at a same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A driving assembly (1), comprising:
an engine (100);
a speed increaser (910), an input end (911) of the speed increaser (910) being connected to the engine (100);
an energy storage device (920);
a generator (300), the generator (300) being connected to an output end (912) of the speed increaser (910);
a driving electric motor (900); and
an integrated electric-motor controller (500), the integrated electric-motor controller (500) being mounted on the generator (300), and the integrated electric-motor controller (500) being connected to each of the generator (300), the driving electric motor (900), and the energy storage device (920).

2. The driving assembly (1) according to claim 1, wherein the generator (300) comprises:
a housing (310);
a first end cap (320), the first end cap (320) being mounted at one end of the housing (310) to seal and cover the one end of the housing (310), and the first end cap (320) being provided with a rotor bearing chamber (321);
a second end cap (330), the second end cap (330) being mounted at the other end of the housing (310) to seal and cover the other end of the housing (310);
a stator (340), the stator (340) being mounted in the housing (310);
a rotor (350), the rotor (350) being mounted in the housing (310), and the rotor (350) being rotatable with respect to the stator (340); and
a rotor bearing (351), the rotor bearing (351) being arranged at the rotor (350) and arranged in the rotor bearing chamber (321),
wherein the integrated electric-motor controller (500) is mounted at the first end cap (320) and the second end cap (330).

3. The driving assembly (1) according to claim 2, wherein the second end cap (330) is configured with a controller interface (332), and the controller interface (332) is configured to connect the integrated electric-motor controller (500) and the generator (300), and connect the integrated electric-motor controller (500) and the driving electric motor (900).

4. The driving assembly (1) according to claim 3, wherein the second end cap (330) is configured with a sealing groove (335) arranged around the controller interface (332), a sealing ring (3351) is mounted in the sealing groove (335), and the sealing ring (3351) seals a gap between the integrated electric-motor controller (500) and the second end cap (330).

5. The driving assembly (1) according to any one of claims 2 to 4, wherein a bearing bush (322) is mounted in the rotor bearing chamber (321), the bearing bush (322) is sleeved over the rotor bearing (351), and a thermal expansion coefficient of the bearing bush (322) is closer to a thermal expansion coefficient of the rotor bearing (351) of the generator (300) than a thermal expansion coefficient of the first end cap (320).

6. The driving assembly (1) according to any one of claims 2 to 5, wherein the first end cap (320) is configured with an annular generator mounting platform (323) and a plurality of reinforcing ribs (324), the annular generator mounting platform (323) surrounds the rotor bearing chamber (321), the annular generator mounting platform (323) is configured with a generator casing mounting structure (3231), and the plurality of reinforcing ribs (324) are respectively connected to the annular generator mounting platform (323) and are arranged at intervals along a circumferential direction of the rotor bearing chamber (321).

7. The driving assembly (1) according to any one of claims 1 to 6, wherein the engine (100) comprises:
an air intake manifold (110);
an intercooler (120), the intercooler (120) being provided with a first air inlet (121) and an air outlet (122), and the air outlet (122) being in communication with the air intake manifold (110); and
a throttle (130), the throttle (130) being arranged at the first air inlet (121).

8. The driving assembly (1) according to claim 7, wherein the engine (100) further comprises:
an engine cylinder block (140), the air intake manifold (110) being in communication with the engine cylinder block (140); and
a cylinder head (150), the cylinder head (150) covering above the engine cylinder block (140), and a mounting bracket (151) being arranged on the cylinder head (150),
wherein in an up-down direction, the intercooler (120) is located above the air intake manifold (110), and the mounting bracket (151) is fixedly connected to at least one of the intercooler (120) and the throttle (130).

9. The driving assembly (1) according to claim 7 or 8, wherein the intercooler (120) comprises:
an intercooler body (123);
an air inlet cavity (124), the first air inlet (121) being opened in the air inlet cavity (124); and
an air outlet cavity (128), the intercooler body (123) being arranged between the air inlet cavity (124) and the air outlet cavity (128) and in communication with each of the air inlet cavity (124) and the air outlet cavity (128), and the air outlet (122) being opened in the air outlet cavity (128).

10. The driving assembly (1) according to claim 9, wherein a gas storage capacity of the intercooler body (123) is V1, and V1 satisfies a relation formula: 1200 ml ≤ V1 ≤ 1300 ml.

11. The driving assembly (1) according to claim 9 or 10, wherein the air inlet cavity (124) is provided with a first air inlet section (125), a second air inlet section (126), and a third air inlet section (127) sequentially in communication, the first air inlet section (125) is in communication with the first air inlet (121), the third air inlet section (127) is in communication with the intercooler body (123) to uniformly guide gas into the intercooler body (123), a cross-sectional area of the third air inlet section (127) is greater than a cross-sectional area of the first air inlet section (125), and a cross-sectional area of the second air inlet section (126) gradually increases from the first air inlet section (125) to the third air inlet section (127).

12. The driving assembly (1) according to claim 11, wherein a spacing between a front side wall (1261) and a rear side wall (1262) of the second air inlet section (126) gradually increases from right to left, an angle between the front side wall (1261) and the rear side wall (1262) of the second **air inlet** section (126) is α, and α satisfies a relation formula: 50° ≤ α ≤ 70°.

13. The driving assembly (1) according to any one of claims 9 to 12, wherein the air outlet cavity (128) is provided with a first air outlet section (128a), a second air outlet section (128b), and a third air outlet section (128c) sequentially in communication, the first air outlet section (128a) is in communication with the air outlet (122), the third air outlet section (128c) is in communication with the intercooler body (123)to uniformly guide gas into the air intake manifold (110), a cross-sectional area of the third air outlet section (128c) is less than a cross-sectional area of the first air outlet section (128a), and a cross-sectional area of the second air outlet section (128b) gradually decreases from an end close to the first air outlet section (128a) to an end close to the third air outlet section (128c).

14. The driving assembly (1) according to claim 13, wherein a spacing between a front side wall (128b1) and a rear side wall (128b2) of the second air outlet section (128b) gradually decreases from right to left, an angle between the rear side wall (128b2) of the second air outlet section (128b) and a cross-section of the air outlet cavity (128) is β, and β satisfies a relation formula: 20° ≤ β ≤ 40°.

15. The driving assembly (1) according to claim 13 or 14, wherein a spacing between an upper side wall (128b3) and a lower side wall (128b4) of the second air outlet section (128b) gradually decreases from right to left, an angle between the upper side wall (128b3) and the lower side wall (128b4) of the second air outlet section (128b) is γ, and γ satisfies a relation formula: 25° ≤ γ ≤ 35°.

16. **The** driving assembly (1) according to any one of claims 7 to 15, further comprising:
an elastic support member (600), the air intake manifold (110) comprising an upper manifold piece (111) and a lower manifold piece (113), the upper manifold piece (111) being arranged above the lower manifold piece (113), a first mounting piece (112) being arranged on the upper manifold piece (111), a second mounting piece (114) being arranged on the lower manifold piece (113), the first mounting piece (112) being higher than the second mounting piece (114), the intercooler (120) being arranged above the upper manifold piece (111) and fixedly connected to each of the first mounting piece (112) and the second mounting piece (114), and the elastic support member (600) being arranged on the upper manifold piece (111) and elastically abutting against and matching the intercooler (120).

17. The driving assembly (1) according to any one of claims 7 to 16, wherein the air intake manifold (110) is provided with a pressure stabilizing cavity (115) and an air inlet passage (119), one end of the air inlet passage (119) is in communication with the pressure stabilizing cavity (115), the other end of the air inlet passage (119) is in communication with the engine (100), a bottom wall of the air inlet passage (119) comprises a first wall section (119a), the first wall section (119a) is connected to a bottom wall of the pressure stabilizing cavity (115) and is arranged obliquely downward with respect to the bottom wall of the pressure stabilizing cavity (115), an angle δ is formed between the first wall section (119a) and the bottom wall of the pressure stabilizing cavity (115), and 2° ≤ δ ≤ 5°.

18. The driving assembly (1) according to claim 17, wherein the bottom wall of the air inlet **passage** (119) further comprises:
a second wall section (119b), the second wall section (119b) being connected to a side of the first wall section (119a) away from the pressure stabilizing cavity (115), the second wall section (119b) being arranged obliquely downward with respect to the first wall section (119a), an angle ε being formed between the second wall section (119b) and the first wall section (119a), and 24° ≤ ε ≤ 26.

19. The driving assembly (1) according to claim 17 or 18, wherein a volume of the pressure stabilizing cavity (115) is V2, and V2 satisfies a relation formula: 1 L < V2 < 1.2 L.

20. The driving assembly (1) according to any one of claims 17 to 19, wherein a length of the air inlet passage (119) is L, and L satisfies a relation formula: 70 mm < L < 80 mm.

21. The driving assembly (1) according to any one of claims 17 to 20, wherein the pressure stabilizing cavity (115) is provided with:
an impact separation piece (1151), the impact separation piece (1151) being located in the pressure stabilizing cavity (115), to impact entering gas to reduce generation of condensed water; and
a flow guiding piece (1152), the flow guiding piece (1152) being arranged in the pressure stabilizing cavity (115), to guide condensed water in the pressure stabilizing cavity (115) to the air inlet passage (119).

22. The driving assembly (1) according to claim 21, wherein the impact separation piece (1151) is an impact grid (116), the pressure stabilizing cavity (115) is provided with a second air inlet (118), and the impact grid (116) corresponds to the second air inlet (118), to impact entering gas to reduce generation of condensed water; and
the flow guiding piece (1152) comprises a plurality of flow guiding baffles (117), a plurality of air inlet passages (119) are provided, each flow guiding baffle (117) is arranged extending toward the air inlet passage (119), and the plurality of flow guiding baffles (117) guide condensed water in the pressure stabilizing cavity (115) to the plurality of air inlet passages (119).

23. The driving assembly (1) according to any one of claims 7 to 22, further comprising:
an air filter (610), the air filter (610) being connected to an air inlet pipe (611);
a mixing valve (700), an air inlet end (720) of the mixing valve (700) being in communication with the air inlet pipe (611), an air outlet end (710) of the mixing valve (700) being in communication with the throttle (130), and a negative pressure at the air outlet end (710) of the mixing valve (700) being greater than a negative pressure at the air inlet end (720) of the mixing valve (700); and
a first vent tube (800), one end of the first vent tube (800) being connected to a crankcase (180) of the engine (100), and the other end of the first vent tube (800) being connected to the air inlet pipe (611).

24. The driving assembly (1) according to claim 23, further comprising:
a vent valve (810), the one end of the first vent tube (800) being connected to the crankcase (180) by the vent valve (810); and
a second vent tube (820), one end of the second vent tube (820) being connected to the vent valve (810), the other end of the second vent tube (820) being connected to the intercooler (120), and a vent load of the second vent tube (820) being less than a vent load of the first vent tube (800).

25. The driving assembly (1) according to claim 24, wherein a height of the first vent tube (800) gradually decreases from the one end to the other end of the first vent tube (800); and/or
a height of the second vent tube (820) gradually decreases from the one end to the other end of the second vent tube (820).

26. The driving assembly (1) according to any one of claims 23 to 25, further comprising:
a thermal insulation jacket (830), the thermal insulation jacket (830) being sleeved over the first vent tube (800), and a wall thickness of the thermal insulation jacket (830) ranging from 3 mm to 5 mm.

27. The driving assembly (1) according to any one of claims 23 to 26, wherein the engine (100) comprises:
a cylinder head cover (160), the cylinder head cover (160) being in communication with the crankcase (180); and
an air supplementing one-way valve (170), the air supplementing one-way valve (170) being arranged at the cylinder head cover (160) and respectively in communication with the air filter (610) and the cylinder head cover (160).

28. The driving assembly (1) according to any one of claims 23 to 27, further comprising:
a supercharger (840), the mixing valve (700) being in communication with the throttle (130) through the supercharger (840); and
an exhaust circulation valve (850), the exhaust circulation valve (850) being in communication with the throttle (130) through the supercharger (840), and the exhaust circulation valve (850) being in communication with an exhaust manifold of the engine (100).

29. A vehicle (1000), comprising the driving assembly (1) according to any one of claims 1 to 28.
